# EUROPÄISCHE PATENTSCHRIFT

(11) **EP 3 996 865 B1**
(45) Veröffentlichungstag und Bekanntmachung des Hinweises auf die Patenterteilung: **11.11.2026**
(21) Anmeldenummer: 20740265.2
(22) Anmeldetag: 08.07.2020
(51) Int. Cl.: B23K 20/12, B23K 37/053

(54) **VORRICHTUNG ZUR ROTATION MINDESTENS EINES WERKSTÜCKES, REIBSCHWEISSVORRICHTUNG MIT EINER SOLCHEN VORRICHTUNG, UND VERWENDUNG EINER SOLCHEN VORRICHTUNG ZUR DURCHFÜHRUNG EINES REIBSCHWEISSVERFAHRENS**
DEVICE FOR ROTATING AT LEAST ONE WORKPIECE, FRICTION WELDING DEVICE COMPRISING SUCH A DEVICE, AND USE OF SUCH A DEVICE FOR CARRYING OUT A FRICTION WELDING METHOD
DISPOSITIF POUR FAIRE TOURNER AU MOINS UNE PIÈCE, DISPOSITIF DE SOUDAGE PAR FRICTION COMPRENANT UN TEL DISPOSITIF, ET UTILISATION D'UN TEL DISPOSITIF POUR LA MISE EN OEUVRE D'UN PROCÉDÉ DE SOUDAGE PAR FRICTION

(30) Priorität: 09.07.2019 DE 102019118509
(43) Veröffentlichungstag der Anmeldung: 18.05.2022
(73) Patentinhaber: Desconpro Engineering GmbH, 73460 Huettlingen (DE)
(72) Erfinder: SIENZ, Alexander, 73453 Abtsgmünd (DE)
(74) Vertreter: Raunecker, Klaus Peter
(86) Internationale Anmeldenummer: PCT/EP2020/069299
(87) Internationale Veröffentlichungsnummer: WO 2021/005126

(56) Entgegenhaltungen:
- EP-B1- 1 837 107
- DE-A1- 102017 112 194
- DE-B- 1 253 021
- DE-U1- 202012 100 886
- US-A- 3 533 639
- US-A- 3 926 447
- US-A- 4 060 190
- US-A1- 2004 238 594
- US-A1- 2016 311 033
- US-A1- 2019 084 054

## Beschreibung

Die Erfindung betrifft eine Vorrichtung zur Rotation von Werkstücken, eine Reibschweißvorrichtung mit einer solchen Vorrichtung, sowie eine Verwendung einer entsprechenden Vorrichtung, siehe Ansprüche 1, 10 und 13.

Vorrichtungen zum Rotieren von Werkstücken sind aus dem Stand der Technik bereits vielfach bekannt. So dienen beispielsweise Reibschweißvorrichtungen dazu, zwei Werkstücke durch Zusammenpressen und insbesondere rotatorisches Reiben an Fügeflächen stoffschlüssig zu verbinden. Der Stoffschluss entsteht dabei dadurch, dass es durch die aufgewandte Reibungsarbeit zu einer Erwärmung und Plastifizierung des jeweiligen Materials kommt. Wesentlich für die Qualität der Verbindung ist dabei, dass der Reibvorgang, sobald die genannte Plastifizierung eintritt, definiert gestoppt wird und der Anpressdruck der Werkstücke gegeneinander aufrechterhalten oder sogar erhöht wird.

Aus dem Stand der Technik sind verschiedenste Vorrichtungen und Verfahren zum Reibschweißen bekannt. So ist beispielsweise in der deutschen Auslegeschrift 1 253 021 eine Reibschweißvorrichtung offenbart, mittels welcher Rohre dadurch verschweißt werden können, dass zwischen zwei feststehenden Rohren ein Verbindungsstück eingepresst und mittels einer drehbaren, angetriebenen Aufnahmevorrichtung in Rotation versetzt wird. Die stoffschlüssige Verbindung wird in diesem Fall durch die aufgrund der Reibungsarbeit an den Kontaktflächen entstehende Wärme und die damit verbundene Plastifizierung des Materials geschaffen. Nach dem Schweißvorgang muss nach der Lehre der genannten Schrift jedoch die gesamte Vorrichtung zum Freigeben der verbundenen Werkstücke über eine freie Stirnseite in Axialrichtung der Rohre verschoben werden. Damit erweist sich der Umgang mit der Reibschweißvorrichtung nach dem Stand der Technik als vergleichsweise aufwändig. Ferner ist in der genannten Vorrichtung eine Zentrierung der Werkstücke zu einander nicht ohne weiteres zuverlässig möglich.

Die deutsche Patentanmeldung DE 10 2017 112 194 A1 (offenbarend den Oberbegriff des Anspruchs 1) betrifft offenbart eine Vorrichtung zur Rotation von zwischen zwei Spannbacken eingespannten Werkstücken mit einem teilbaren Aufnahmehohlrad, welches in Laufrollen gelagert ist und über einen Zahnradantrieb angetrieben wird. Die zur Spannung des Werkstücks benötigte Kraft wird über einen Grundrahmen und die das Aufnahmehohlrad führenden Laufrollen auf die beiden Spannbacken aufgebracht, was zu einer sehr hohen Belastung der Laufrollen führt, welches sich nachteilig auf die Lebensdauer der Laufrollen auswirkt. Zudem wirken sich die hohen Kräfte beim Zusammenfahren der Spannbacken nachteilig auf die Zentrierung des Werkstückes aus.

Aufgabe der vorliegenden Erfindung ist es, eine Vorrichtung bereitzustellen, welche die oben beschriebenen Nachteile des Standes der Technik löst. Eine weitere Aufgabe der vorliegenden Erfindung ist es, ein verbessertes Reibschweißverfahren anzugeben.

Diese Aufgabe wird gelöst durch eine Vorrichtung und ein Verfahren mit den Merkmalen der unabhängigen Ansprüche 1 und 13. Die Unteransprüche betreffen vorteilhafte Weiterbildungen und Varianten der Erfindung.

Eine erfindungsgemäße Vorrichtung zur Rotation mindestens eines Werkstückes umfasst eine drehbar in einer Konsole gelagerte Aufnahmevorrichtung, die dazu eingerichtet ist, das Werkstück aufzunehmen und in Rotation um eine Werkstückachse zu versetzen, wobei die Aufnahmevorrichtung ein radial teilbares Aufnahmehohlrad umfasst. Dabei ist in dem Aufnahmehohlrad eine radial teilbare Spannzange angeordnet.

Insbesondere kann es sich bei den Werkstücken um langgestreckte rohr- oder zylinderförmige Werkstücke handeln, die derart in der Aufnahmevorrichtung eingespannt werden, dass die Rotationsachse mit der Rotationssymmetrieachse des Werkstückes zusammenfällt. Ebenso sind als Werkstücke beispielsweise Rohre mit einem rechteckförmigen oder quadratischen Querschnitt denkbar. Unter einem radial teilbaren Aufnahmehohlrad soll im Folgenden insbesondere ein Hohlrad verstanden werden, welches kreisringförmig aus mindestens zwei Hohlradsegmenten gebildet ist, wobei die Hohlradsegmente voneinander gelöst werden können.

Unter einer teilbaren Spannzange soll in diesem Zusammenhang eine segmentierte Spannzange verstanden werden, welche kreisringförmig aus mindestens zwei Zangensegmenten gebildet ist und die in radialer Richtung geteilt werden kann, wobei die Spannzange in Ihrer Funktion wie eine einteilige Spannzange wirkt. Durch die segmentierte Spannzange kann das Werkstück beim Spannen, je nach Anzahl der Segmente der Spannzange an mehreren Punkten radial gespannt werden, wodurch die Spannkräfte vorteilhaft auf den gesamten Umfang des Werkstücks verteilt werden können. Die Teilbarkeit der Spannzange erlaubt es dabei, ein zu spannendes Werkstück nach Öffnen der Spannzange von der Seite her in diese einzulegen, ohne dass ein aufwendiges Einführen eines langgestreckten Werkstückes in Axialrichtung erforderlich ist.

Erfindungsgemäß ist eine Kinematik zur Betätigung der Spannzange zum Spannen des Werkstücks im Inneren des Aufnahmehohlrades angeordnet, welche eine Übersetzung umfasst. Die Kinematik kann nach dem Einlegen des Werkstücks in die Aufnahmevorrichtung bewirken, dass die Spannzange schließt und dadurch das Werkstück gespannt werden kann.

Insbesondere kann die Kinematik Schrägen und Kegel umfassen, wobei die Schrägen und Kegel aufeinander abgleiten können.

Je nach Auslegung der Übersetzung kann der Weg des Antriebs größer als der Weg der Spannzange sein oder umgekehrt. Das Gleiche gilt für die durch die Übersetzung übertragene Kraft, wodurch der Verfahrweg und die Stellkräfte des Antriebs zum Spannen der Spannzange vorteilhaft variiert werden können.

Die Kinematik umfasst entsprechend der Erfindung zwei Übersetzungsstufen, wobei die erste Übersetzungsstufe eine radiale in eine axiale Bewegung und die zweite Übersetzungsstufe eine axiale Bewegung in eine radiale Bewegung übersetzt. Die unterschiedlichen Bewegungsrichtungen des Eingangs und des Ausgangs der jeweiligen Übersetzungsstufe ermöglichen eine vorteilhafte Anordnung der Kinematik in dem Aufnahmehohlrad. Dadurch kann die Aufnahmevorrichtung sehr kompakt ausgebildet werden, wodurch sich das insbesondere beim Abbremsen der Vorrichtung relevante Trägheitsmoment der Aufnahmevorrichtung vorteilhaft verringern kann.

Weiterhin kann die Kinematik elastische Elemente zur Aufbringung der Spannkraft umfassen. Die elastischen Elemente können als Spiralfeder, Druckfeder oder als Elastomer ausgebildet sein und können durch das Schließen der Aufnahmevorrichtung so ausgelenkt werden, dass die resultierenden Federkräfte die Spannzange über die Kinematik spannen können.

Daneben kann die Spannzange so ausgebildet sein, dass sie unabhängig von der Kinematik zum Betätigen der Spannzange zentriert werden kann. Dabei werden beispielsweise die Zangensegmente der Spannzange zur Achse des Aufnahmehohlrades zunächst zentriert und nachfolgend wird die Spannzange über die Kinematik gespannt. Dies hat den Vorteil, dass die Zentrierung nahezu kräftefrei verläuft und die für die Zentrierung genutzte Zwangsführung nur geringe Belastungen sieht.

In einer Variante der Erfindung kann die auf das Werkstück wirkende Spannkraft einstellbar sein. Dies kann einerseits über einen Austausch der als Antrieb der Spannzange fungierenden elastischen Elemente oder durch eine Einstellung der Deformation der elastischen Elemente bei geschlossenem Aufnahmehohlrad realisiert werden.

Weiterhin kann am Umfang des Aufnahmehohlrades eine Wälzlagerfläche ausgebildet sein. Das Aufnahmehohlrad wird an der Wälzlagerfläche durch in der Konsole angeordnete Laufrollen bei der Rotation geführt. Die Laufrollen können dabei so ausgebildet sein, dass diese durch eine durch Betriebskräfte hervorgerufene Deformation bewirkt in einem vorher bestimmten Betriebszustand eine mit der runden Wälzlagerfläche korrespondierende Form einnehmen können. Dies hat den Vorteil, dass die Lauffläche der Laufrollen sich nahezu vollständig an die Wälzlagerfläche anschmiegt und eine optimale Kraftverteilung über die Fläche gewährleistet ist.

In einer Variante der Erfindung kann das Aufnahmehohlrad eine Verriegelung umfassen. Die beiden Hohlradsegmente des Aufnahmehohlrades werden durch das Zusammenfahren der beiden Konsolen zusammen gefügt und in dieser Position gehalten. Der Übergang der beiden halbkreisförmigen Wälzlagerflächen der beiden Hohlradsegmente des Aufnahmehohlrades ist zweckmäßigerweise eben, also ohne Absatz ausgebildet. Die Verriegelung des Aufnahmehohlrades ist dabei so ausgebildet, dass die beiden Hohlradsegmente reproduzierbar zueinander verriegelt werden können. Die Verriegelung kann dabei in einem Hohlradsegment des Aufnahmehohlrades eine Aufnahmehülse und in dem anderen Hohlradsegment einen Spreizdorn umfassen. Der Spreizdorn kann dabei einen Achsdorn umfassen, auf dem eine nach außen spannenden Spannbacke, ein Anschlag und ein Gegenkegel angeordnet sein können. Der Gegenkegel kann durch ein Federpaket bis zum Anschlag geschoben werden, wodurch der Außendurchmesser der Spannbacken vergrößert und gegen die Innenfläche der Aufnahmehülse gedrückt wird, also die beiden Hohlradsegmente in der gefügten Position verriegelt.

Je nach Ausgestaltung des Innendurchmessers kann die Verriegelung kraftschlüssig oder formschlüssig ausgebildet sein. Im Fall eines kontinuierlichen Innendurchmessers der Aufnahmehülse beruht die Verriegelung auf einem Kraftschluss, die Verriegelung wird also nur über die Reibung zwischen der Aufnahmehülse und der Spannzange gehalten. Im Fall eines sich zur Trennstelle hin verjüngenden Innendurchmessers der Aufnahmehülse beruht die Verriegelung auf einem Formschluss, die Spannzange wird also durch die Geometrie der Aufnahmehülse daran gehindert, sich zu lösen. Die Spannzange kann dabei so ausgelegt sein, dass sie zum Lösen der Verriegelung aktuiert werden muss. Damit bleibt beispielsweise im Fall eines Ausfalls eines zum Entspannen der Spannzange verwendeten Aktuators, wie beispielsweise bei einem Stromausfall, die Verriegelung verriegelt. Ein Vorteil der Verriegelung ist es, dass die beiden Hohlradsegmente des Aufnahmehohlrades bei dem Verriegeln immer in der gleichen Position zueinander ausgerichtet werden können.

Insbesondere können die Wälzlagerflächen im verriegelten Zustand bearbeitet werden. Dies hat den Vorteil, dass ein absatzförmiger Übergang der Wälzlagerfläche an der Trennstelle der beiden Hohlradsegmente vermieden werden kann und eine Schwingungsanregung der Vorrichtung bei einem Passieren der Laufrollen der Trennstelle nahezu vollständig vermieden werden kann.

In einer Variante der Erfindung kann die Vorrichtung dazu eingerichtet sein, das Werkstück unabhängig vom Spannvorgang zu zentrieren. Im geöffneten Zustand kann eine Kegelhülse zusammen mit dem in ihr angeordnete Spannzangenkegel und die Spannzange durch Federn, die an der Rückseite der Kegelhülse, also zwischen der Innenfläche des Grundkörpers und dem Außendurchmesser der Kegelhülse angeordnet sind, aus dem Grundkörper des Aufnahmehohlrades herausgedrückt werden. Beim Zusammenfahren der beiden Konsolen kann die Trennstelle der Kegelhülse und des Spannzangenkegels so vor der Trennstelle des Grundkörpers in Kontakt kommen. Durch eine in dem Spannzangenkegel angeordnete Führung, die einen Zylinderstift in einem der beiden Segmente und eine Bohrung in dem anderen Segment umfassen kann, wird die Bewegung der beiden Segmente des Spannzangenkegels synchronisiert, so das beim Kontakt der Trennstellen der Spannzangenkegel und damit auch die Spannzange in der Kegelhülse zentriert sind. Nachfolgend wird die Kegelhülse in den Grundkörper geschoben, wobei das Werkstück in der vorher zentrierten Spannzange gespannt wird, bis auch die Trennstellen des Aufnahmehohlrades in Kontakt stehen und verriegelt werden können.

Daneben kann die Spannvorrichtung so ausgebildet sein, dass der Kraftfluss der Spannkräfte innerhalb des Aufnahmehohlrades verläuft. Die Spannkräfte können sich über den Grundkörper abstützen und nachfolgend von der Verriegelung aufgenommen werden. Dadurch können vorteilhafterweise keine Reaktionskräfte der Spannzange auf die Laufrollen der Vorrichtung wirken.

Weiterhin können die beiden Konsolen so ausgebildet sein, dass mindestens eine auf die Werkstückachse zu oder von dieser weg bewegbar ist. Dies hat den Vorteil, dass die feststehende Konsole die Rotationsachse der Vorrichtung vorgeben kann und die bewegliche Konsole nach dem Einlegen des Werkstücks zugestellt werden kann, bis zunächst die Spannzange zur Rotationachse der Vorrichtung und damit zur Rotationssymmetrieachse des Werkstücks zentriert und diese nachfolgend gespannt werden kann. Dies hat den Vorteil, dass die bewegbare Konsole beim Zustellen nicht synchronisiert werden muss und die Zentrierung automatisch erfolgt.

Die beschriebene Vorrichtung kann in vorteilhafter Weise zur Durchführung eines Reibschweißverfahrens zum Verbinden mindestens zweier äußerer Werkstücke mit einem zwischen den beiden äußeren Werkstücken angeordneten inneren Werkstück verwendet werden. Dabei ruhen die beiden äußeren Werkstücke während des Schweißganges gegenüber der Vorrichtung und das innere Werkstück rotiert, während das innere Werkstück von der ebenfalls mitrotierenden Aufnahmevorrichtung gehalten wird. Selbstverständlich ist es auch möglich, nur eine Seite eines Werkstückes mit einem weiteren Werkstück zu verschweißen. In diesem Fall würde anstatt eines äußeren Werkstückes ein sich mitdrehender Adapter verwendet.

Dadurch können die beiden äußeren Werkstücke vor dem Reibschweißvorgang in eine definierte räumliche Anordnung gebracht werden und während des Reibschweißvorganges kann diese definierte räumliche Anordnung zuverlässig beibehalten werden.

Die Verwendung der Vorrichtung ist insbesondere für die Produktion von Gelenkwellen vorteilhaft, also wenn die beiden äußeren Werkstücke mit Gelenken versehen sind und es sich bei dem inneren Werkstück um eine Welle handelt. In den meisten Fällen ist es bei derartigen Gelenkwellen erforderlich, dass die beiden Gelenke eine definierte Winkelstellung zu einander aufweisen. Dies lässt sich in denjenigen Fällen, in welchen die Gelenke in fixen Aufnahmen ruhen, während die Welle im Zuge des Reibschweißvorganges rotiert, besonders einfach realisieren. Hierbei kann die Welle in zwei synchron laufenden Vorrichtungen eingespannt sein.

Durch die kompakte Bauweise der Vorrichtung und eine mögliche Verwendung von Elektromotoren als Antrieb können durch mehrere hintereinander angeordnete Vorrichtungen prinzipiell beliebig lange Bauteile, insbesondere Rohre, miteinander verschweißt werden. Durch einen gegenläufigen Betrieb kann die benötigte Drehzahl je Vorrichtung halbiert werden oder es kann bei gleichem Anpressdruck eine höhere Wärmleistung erzielt werden, da die Relativgeschwindigkeit der zu fügenden Oberflächen gegeneinander verdoppelt wird. Dies kann beispielsweise beim Reibschweißen von Aluminiumteilen von Vorteil sein. Darüber hinaus kann auf diese Weise beispielsweise eine Verjüngung des Rohdurchmessers durch Anschweißen von Rohrenden mit geringerem Durchmesser realisiert werden. Soll das Rohr an beiden Seiten verjüngt werden, kann es auch zu einer Anordnung von drei Vorrichtungen hintereinander kommen, wobei die äußeren Vorrichtungen in die gleiche Richtung angetrieben werden können und die mittlere in die entgegengesetzte Richtung.

Die Erfindung ist jedoch nicht auf Reibschweißvorrichtungen beschränkt; sie kann prinzipiell überall dort vorteilhaft eingesetzt werden, wo eingespannte Werkstücke zentriert in Rotation versetzt werden müssen.

Nachfolgend werden Ausführungsbeispiele und Varianten der Erfindung anhand der Zeichnung näher erläutert. Es zeigen
- Figur 1: eine exemplarische Darstellung der Erfindung,
- Figur 2: eine Detailansicht der Erfindung in einer Schnittdarstellung,
- Figur 3: eine weitere Detailansicht der Erfindung in einer Explosionsdarstellung,
- Figur 4: eine weitere Detailansicht der Erfindung in einer Schnittdarstellung,
- Figur 5: eine weitere Detaildarstellung der Erfindung in einer Schnittdarstellung, und
- Figur 6: einen vertikalen Schnitt durch eine weitere Detaildarstellung der Erfindung.

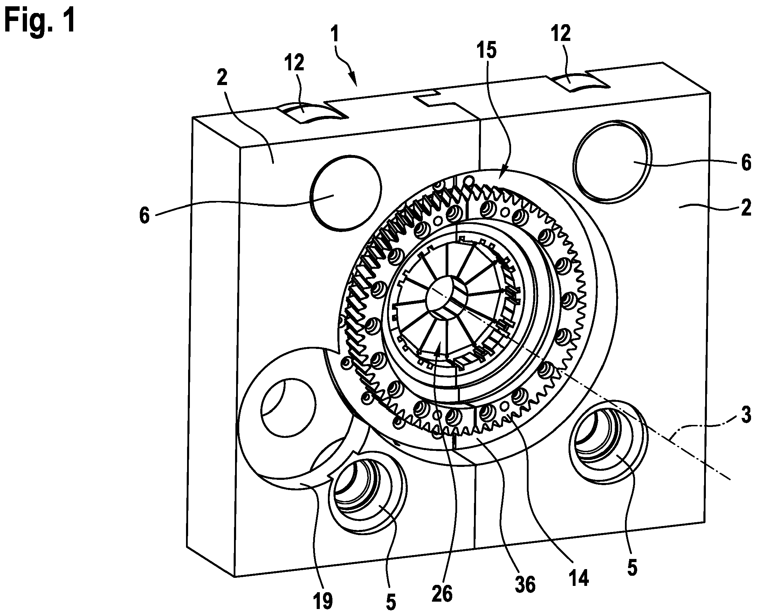

Figur 1 zeigt eine perspektivische Ansicht der Erfindung, in der eine Aufnahmevorrichtung 1 dargestellt ist. Die Aufnahmevorrichtung 1 umfasst zwei zueinander bewegbare Konsolen 2, in denen jeweils zwei Laufrollen 12 in Aufnahmen 6 gelagert sind. Die Aufnahmen 6 sind ihrerseits in Lagern 5 in den Konsolen 2 gelagert. Die Laufrollen 12 sind zu einer im gemeinsamen Zentrum der Konsolen 2 liegenden Rotationsachse 3, die der Rotationssymmetrieachse des Werkstücks (nicht dargestellt) entspricht, symmetrisch angeordnet. Zwischen den Laufrollen 12 ist ein Aufnahmehohlrad 15 angeordnet, welches sich in den Laufrollen 12 um die Achse 3 dreht und von diesen geführt wird. Das Aufnahmehohlrad 15 umfasst einen Bügel 36 zur Betätigung einer Verriegelung (nicht dargestellt) und ein Antriebszahnrad 14, welches über einen nicht dargestellten Antrieb mit einem korrespondieren Zahnradritzel angetrieben werden kann. Eine der Konsolen weist eine Aussparung 19 auf, in die der Antrieb mit dem Antriebsritzel eintauchen kann. Im Aufnahmehohlrad 15 ist eine Spannzange 26 angeordnet, die wie das Aufnahmehohlrad 15, das Antriebszahnrad 14 und der Bügel 36 zweigeteilt ausgebildet ist, also zwei Zangensegmente umfasst.

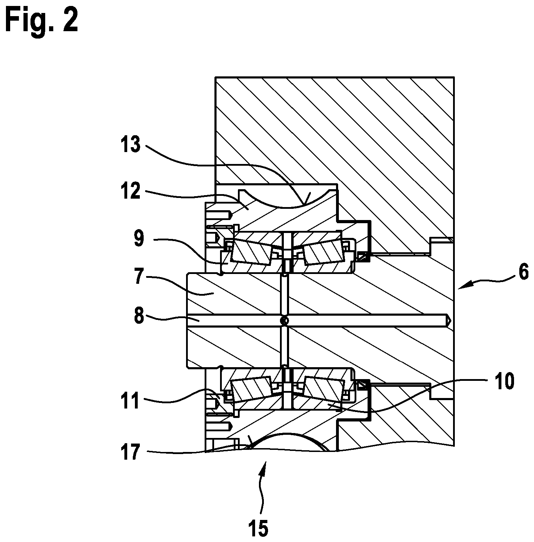

Figur 2 zeigt eine Detailansicht der Erfindung in einer Schnittdarstellung, in der eine Laufrolle 12 und ein Teil des Aufnahmehohlrades 15 dargestellt sind. Das Aufnahmehohlrad 15 umfasst an seinem Umfang eine Wälzlagerlauffläche17. Die Laufrolle 12 ist im gezeigten Beispiel auf einem Kegelrollenlager 9 gelagert, welches für die Aufnahme von hohen Radialkräften und Axialkräften ausgebildet ist. Prinzipiell kommen auch andere Lager, insbesondere Wälzlager, hierfür in Frage. Das Kegelrollenlager 9 ist auf der Achse 7 der Aufnahme 6, die eine zentrische Schmierbohrung 8 umfasst, angeordnet, wobei der Außenring 10 des Kegelrollenlagers 9 mit einer Mutter 11 in der Laufrolle 12 fixiert ist. Die konkave Lauffläche 13 der Laufrolle 12 ist so geformt, dass sie sich unter einer vorher bestimmten Betriebslast an die runde Wälzlagerfläche 17 des Aufnahmehohlrades 15 flächig anschmiegt und so eine nahezu optimale Kraftübertragung zwischen der Lauffläche 13 und der Wälzlagerfläche 17 gewährleistet. Das Aufnahmehohlrad 15 wird durch insgesamt vier Laufrollen 12 in der Aufnahmevorrichtung 1 geführt.

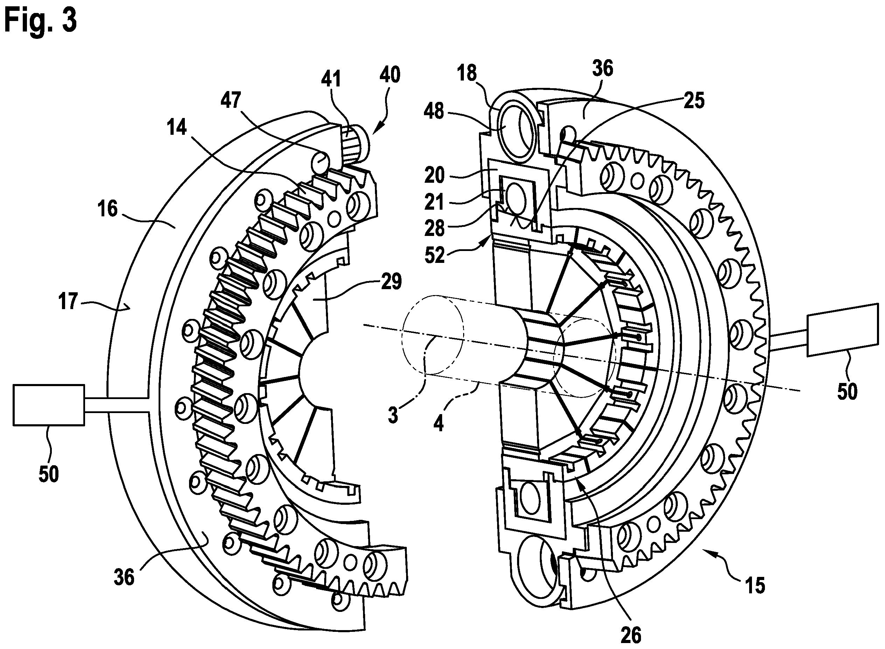

Figur 3 zeigt eine weitere Detailansicht der Erfindung in einer Explosionsdarstellung, in der das geteilte Aufnahmehohlrad 15 dargestellt ist. Die folgenden Ausführungen für die beschriebenen Bauteile und deren Anordnung im Aufnahmehohlrad 15 beziehen sich jeweils nur auf eines der beiden Segmente der jeweils geteilten Bauteile und gelten, wenn nicht anders angezeigt, in identischer Weise auch für das zweite Segment. Das Aufnahmehohlrad 15 umfasst einen halbrunden Grundkörper 16, der an seinem Umfang eine Wälzlagerfläche 17 umfasst und beispielsweise aus einem typischen Wälzlagerstahl (100Cr6) gefertigt ist. Das in der Figur rechts dargestellte Hohlradsegment des Aufnahmehohlrades 15 umfasst an der Trennstelle unterhalb der Wälzlagerfläche 17 eine Aussparung 18, in der eine Aufnahmehülse 48 angeordnet ist. In diese Aufnahmehülse 48 taucht ein Spreizdorn 41 einer Verriegelung 40 beim Zusammenfügen der beiden Hohlradsegmente des Aufnahmehohlrades 15 ein, der auf der korrespondierenden Trennstelle des linken Hohlradsegments des Grundkörpers 16 angeordnet ist, und verriegelt so die beiden Hohlradsegmente. An der Seite des Aufnahmehohlrades 15 sind ein Antriebszahnrad 14 und ein Bügel 36 angeordnet. Das Antriebszahnrad 14 ist fest mit dem Aufnahmehohlrad 15 verbunden und treibt über den nicht dargestellten Antrieb und ein Zahnradritzel das Aufnahmehohlrad 15 an. Der Bügel 36 ist auf dem Grundkörper 16 beweglich gelagert und über einen Bolzen 47 mit dem Spreizdorn 41 verbunden. Der Bügel 36 ist über einen am Umfang um 90° von der Trennstelle versetzt angeordneten Aktuator 50 verbunden und kann von diesem radial nach außen gezogen werden, wodurch die Verriegelung 40 gelöst wird. An der der Wälzlagerfläche 17 gegenüberliegenden Innenfläche des Grundkörpers 16 ist eine halbkreisförmige Kegelhülse 20 mit einem u-förmigen Profil angeordnet, in dem ein ebenfalls halbkreisförmiger Spannzangenkegel 21 angeordnet ist. In Richtung der Rotationsachse 3 anschließend ist innerhalb des Spannzangenkegels 21 eine halbkreisförmige segmentierte Spannzange 26 mit Wechselbacken 29 angeordnet. Die Spannzange 26 umfasst ebenfalls zwei Zangensegmente. An der Innenseite des Spannzangenkegels 21 ist eine Kegelfläche 25 mit einem Kegelwinkel von im gezeigten Beispiel ca. 5° ausgebildet. Die Kegelfläche 25 korrespondiert mit der an dem Umfang der Spannzange 26 ausgebildeten Kegelfläche 28. Die Spannzange 26 wird durch eine axiale Bewegung des Spannzangenkegels 21 in radialer Richtung bewegt und spannt so das Werkstück 4, wobei die aufeinander beweglichen Kegelflächen 25, 28 eine Übersetzung 52 darstellen, in der eine axiale Bewegung in eine radiale Bewegung übersetzt wird und über die beiden Kegelflächen 25, 28 das Verhältnis von axialer zu radialer Bewegung in Abhängigkeit von dem Kegelwinkel eingestellt werden kann. Im Fall von einem Kegelwinkel von 5° ist das Verhältnis 1: 0,09. Die Spannzange 26 kann durch einen Austausch der Wechselbacken 29 auf unterschiedliche nominelle Durchmesser der überwiegend als Rohre ausgebildeten Werkstücke 4 eingestellt werden.

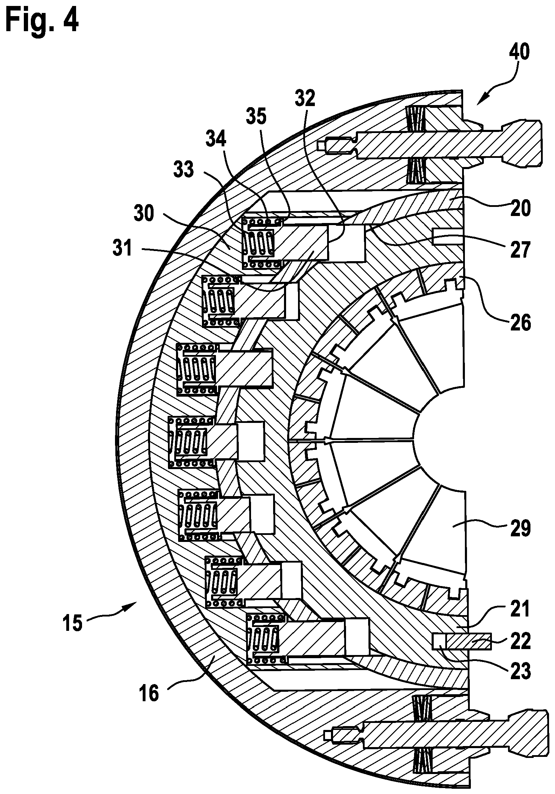

Figur 4 zeigt eine weitere Detailansicht in einer Schnittdarstellung, in der eines der beiden Hohlradsegmente des Aufnahmehohlrades 15 in einer geöffneten Stellung dargestellt ist. Der Schnitt verläuft in radialer Richtung und in der Mitte des Aufnahmehohlrades 15. Im Grundkörper 16 ist ein Bolzenadapter 30 angeordnet, in dem im gezeigten Beispiel sieben Spannbolzen 31senkrecht zur Trennfläche des Aufnahmehohlrades 15 angeordnet sind. Die Spannbolzen 31 haben an der zur Wälzlagerfläche 17 gerichteten Rückseite eine Bohrung, in der eine erste Feder 33 angeordnet ist, die sich am Bolzenadapter 30 abstützt. An der Außenseite der Spannbolzen 31 ist nahe der Mitte des Spannbolzens 31 ein Flansch 35 ausgebildet, an dem sich eine zweite Feder 34 abstützt, die um den Außendurchmesser der Spannbolzen 31 herum angeordnet ist. Die beiden Federn 33, 34 sind so miteinander kombiniert, dass die gemeinsame Kraft-Kennlinie über den genutzten Bereich nahezu linear verläuft und auch die Unterschiede zwischen den Kraft-Kennlinien der Federpaare 33, 34 der einzelnen Spannbolzen 31 so gering wie möglich sind. An der Vorderseite der Spannbolzen 31 ist eine Schräge 32 ausgebildet. Die Spannbolzen 31 werden in dem Bolzenadapter 30 geführt und tauchen beim Schließen der Aufnahmevorrichtung 1 in korrespondierende Aussparungen 27 in der Kegelhülse 20 ein und betätigen über den Spannzangenkegel 21 die Spannzange 26. Der Spannzangenkegel 21 umfasst an der Trennstelle der beiden Segmente eine als Bohrung ausgebildete Führung 23 für einen korrespondierenden Zylinderstift 22, der auf der gegenüberliegenden Trennstelle des anderen Segments der Kegelhülse 20 angeordnet ist. Durch das Eintauchen des Zylinderstifts 22 in die Führung 23 wird der Spannzangenkegel 21 und damit die Spannzange 26 zur Kegelhülse 20 zentriert, so dass die Rotationssymmetrieachse des Werkstücks 4 nach dem Spannen immer in der Rotationsachse 3 des Aufnahmehohlrades 15 positioniert ist. Das Aufnahmehohlrad 15 wird nach dem vollständigen zusammenfahren der Konsolen (nicht dargestellt) mit der Verriegelung 40 verriegelt, von der auch nur ein Segment dargestellt ist. Alle weiteren Bauteile und deren Funktion und Anordnung entsprechen dem in Figur 1 und Figur 2 beschriebenen und werden daher hier nicht noch einmal wiederholt.

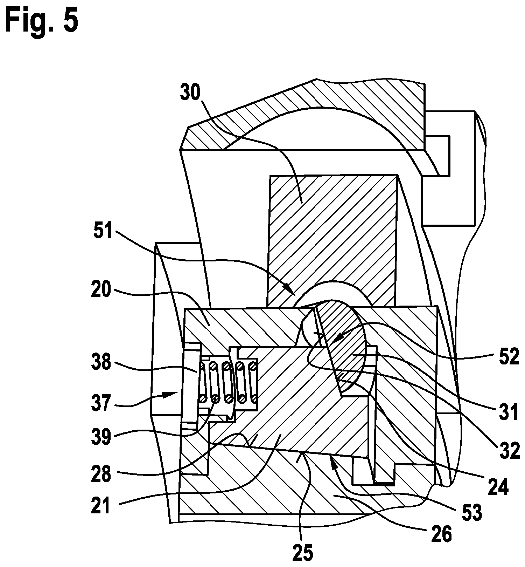

Figur 5 zeigt eine weitere Detailansicht der Erfindung in einer Schnittdarstellung, in der die Kinematik 51 zum Spannen der Spannzange 26 dargestellt ist. Die Kinematik 51 umfasst dabei zwei Übersetzungen 52, 53, wobei die erste Übersetzung 52 zwischen den Spannbolzen 31 und dem Spannzangenkegel 21 und die zweite Übersetzung 53 zwischen dem Spannzangenkegel 21 und der Spannzange 26 ausgebildet ist. Beim Eintauchen des im Bolzenadapter 30 geführten Spannbolzens 31 in die Aussparung der Kegelhülse 20 stützt sich dieser mit der der Schräge 32 gegenüberliegenden Seite an der Kegelhülse 20 ab und die Schräge 32 gleitet an der korrespondierenden Schräge 24 des Spannzangenkegels 21 ab, wodurch der Spannzangenkegel 21 in axialer Richtung ausgelenkt wird. Die axiale Bewegung des Spannzangenkegels 21 bewirkt, dass die Kegelfläche 25 des Spanzangenkegels 21 an der korrespondierenden Kegelfläche 28 der Spannzange 26 abgleitet. Die axiale Bewegung wird in eine radiale Bewegung übersetzt, wodurch die Spannzange 26 radial gespannt wird. Der Kegelwinkel der beiden Kegelflächen 25, 28 ist selbsthemmend ausgebildet, um ein sicheres Spannen des Werkstücks 4 zu gewährleisten. Beim Öffnen der Aufnahmevorrichtung ziehen sich die Spannbolzen 31 zurück, wobei der Spannzangenkegel 21 auf Grund der Selbsthemmung nicht von selbst in seine ursprüngliche Position zurückkehrt. Ein in der Kegelhülse 20 axial angeordnetes Druckstück 37 mit einer Halterung 38 und einer Feder 39 bewirkt durch die beim Spannen der Spannzange 26 vorgespannte Feder 39 eine Rückstellkraft, die so ausgebildet ist, dass die Selbsthemmung überwunden wird und der Spannzangenkegel 21 axial in seine ursprüngliche geöffnete Position bewegt wird.

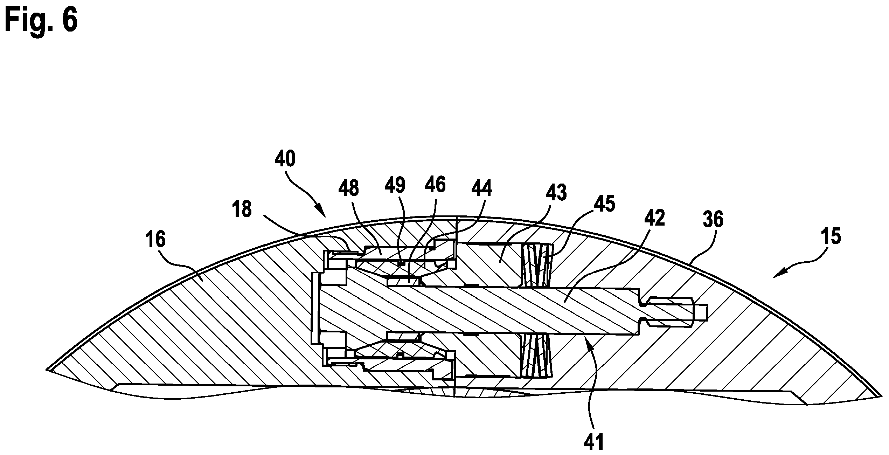

Figur 6 zeigt einen vertikalen Schnitt durch eine weitere Detaildarstellung der Erfindung, die das Aufnahmehohlrad 15 im Bereich der Verriegelung 40 zeigt. Nach dem Zusammenführen der beiden Hohlradsegmente des Aufnahmehohlrades 15 durch das Zusammenfahren der Konsolen (nicht dargestellt) werden die beiden Hohlradsegmente verriegelt. Die Verriegelung 40 stellt sicher, dass die Schnittstelle der Wälzlagerfläche am Umfang des Grundkörpers 16 keinen Versatz aufweist. Die Verriegelung 40 umfasst eine in einem ersten Segment des Grundkörpers 16 angeordnete Aufnahmehülse 48, die in einer Aussparung 18 in der Stirnseite des Segments angeordnet ist. Das andere Segment umfasst einen Spreizdorn 41, der einen Achsdorn 42, einen Gegenkegel 43, eine Spannzange 44 und einen Anschlag 46 umfasst. Eine Feder 45, die zwischen dem Gegenkegel 43 des Spreizdorns 41 und dem Grundkörper 16 angeordnet ist, bewirkt, dass der Gegenkegel 43 die Spannzange 44 betätigt, also den Umfang radial nach außen vergrößert, wodurch sich die Spannzange 44 in der Aufnahmehülse 48 verklemmt. Zum Lösen der Spannzange 44 wird der Gegenkegel 43 an einem Bolzen (nicht dargestellt) durch den Bügel 36 gegen die Feder 45 gezogen, wodurch die Spannzange 44 gelöst wird. Das Lösen der Spannzange 44 wird durch einen in einer Nut am Umfang der Spannzange 44 angeordneten Federring 49 unterstützt. Die in der Figur gezeigte Verriegelung 40 beruht auf dem Prinzip des Kraftschlusses, wobei die Verriegelung 40 nur auf der Reibung zwischen der Spannzange 44 und der Aufnahmehülse 48 beruht. Alternativ kann die Innenfläche der Aufnahmehülse 48 als Kegelfläche ausgebildet werden, wobei sich der Innendurchmesser von der Schnittstelle ausgehend verjüngt. Der Außendurchmesser der Spannzange 44 kann korrespondierend ausgeführt werden, so dass es zu einer formschlüssigen Verriegelung kommt.

### Bezugszeichenliste

- 1: Aufnahmevorrichtung
- 2: Konsole
- 3: Achse / Rotationsachse
- 4: Werkstück
- 5: Lager Aufnahme
- 6: Aufnahme Laufrollen
- 7: Achse Aufnahme
- 8: Schmierbohrung
- 9: Kegelrollenlager
- 10: Außenring
- 11: Mutter
- 12: Laufrollen
- 13: Lauffläche
- 14: Antriebszahnrad
- 15: Aufnahmehohlrad
- 16: Grundkörper
- 17: Wälzlagerfläche
- 18: Aussparung Aufnahmehülse
- 19: Aussaprung Konsole
- 20: Hülse
- 21: Spannzangenkegel
- 22: Zylinderstift Zentrierung Spannzangenkegel
- 23: Führung Bolzen Zentrierung Spannzangenkegel
- 24: Schräge Spannzangenkegel
- 25: Kegelfläche Spannzangenkegel
- 26: Spannzange
- 27: Aussparung Hülse
- 28: Kegelfläche Spannzangen
- 29: Wechselbacken
- 30: Bolzenadapter
- 31: Spannbolzen
- 32: Schräge Spannbolzen
- 33: erste Feder
- 34: zweite Feder
- 35: Flansch Bolzen
- 36: Bügel
- 37: Druckstück
- 38: Halterung
- 39: Feder Druckstück
- 40: Verriegelung
- 41: Spreizdorn
- 42: Achsdorn
- 43: Gegenkegel
- 44: Spannzange
- 45: Feder
- 46: Anschlag
- 47: Bolzen Verriegelung
- 48: Aufnahmehülse
- 49: Federring
- 50: Aktuator
- 51: Kinematik
- 52: erste Übersetzung
- 53: zweite Übersetzung

## Patentansprüche

1. Vorrichtung zur Rotation mindestens eines Werkstückes (4), wobei eine drehbar in einer Konsole (2) gelagerte Aufnahmevorrichtung (1) vorhanden ist, die dazu eingerichtet ist, das Werkstück (4) aufzunehmen und in Rotation um eine Werkstückachse zu versetzen, wobei die Aufnahmevorrichtung (1) ein radial teilbares Aufnahmehohlrad (15) umfasst, wobei in dem Aufnahmehohlrad (15) eine radial teilbare Spannzange (26) angeordnet ist, wobei eine Kinematik (51) zur Betätigung der Spannzange (26) zum Spannen des Werkstücks (4) im Inneren des Aufnahmehohlrades (15) angeordnet ist, **dadurch gekennzeichnet, dass**
die Kinematik (51) zwei Übersetzungsstufen (52,53) umfasst, wobei die erste Übersetzungsstufe (52) eine radiale in eine axiale Bewegung übersetzt und wobei
die zweite Übersetzungsstufe (53) eine axiale Bewegung in eine radiale Bewegung übersetzt.

2. Vorrichtung nach Anspruch 1,
**dadurch gekennzeichnet, dass**
die erste und zweite Übersetzungstufen (52, 53) der Kinematik (51) Schrägen (24,32) und Kegel (25,28) umfasst

3. Vorrichtung nach einem der vorangehenden Ansprüche,
**dadurch gekennzeichnet, dass**
die Kinematik (51) elastische Elemente (33,34) zur Aufbringung der Spannkraft umfasst.

4. Vorrichtung nach einem der vorangehenden Ansprüche,
**dadurch gekennzeichnet, dass**
die Spannzange (26) so ausgebildet ist, dass sie unabhängig von der Kinematik (51) zum Betätigen der Spannzange (26) zentriert werden kann.

5. Vorrichtung nach einem der vorangehenden Ansprüche,
**dadurch gekennzeichnet, dass**
eine auf das Werkstück (4) wirkende Spannkraft einstellbar ist.

6. Vorrichtung nach einem der vorangehenden Ansprüche,
**dadurch gekennzeichnet, dass**
am Umfang des Aufnahmehohlrades (15) eine Wälzlagerfläche (17) ausgebildet ist.

7. Vorrichtung nach einem der vorangehenden Ansprüche,
**dadurch gekennzeichnet, dass**
das Aufnahmehohlrad (15) eine Verriegelung (40) umfasst.

8. Vorrichtung nach Anspruch 7,
**dadurch gekennzeichnet, dass**
die Verriegelung kraftschlüssig oder formschlüssig ausgebildet ist.

9. Vorrichtung nach einem der vorangehenden Ansprüche,
**dadurch gekennzeichnet, dass**
die Vorrichtung eine Führung (22,23) zu einem vom Spannvorgang unabhängigen Zentrieren des Werkstücks (4) umfasst.

10. Reibschweißvorrichtung, welche eine Vorrichtung zur Rotation mindestens eines Werkstücks (4) nach einem der vorangehenden Ansprüche umfasst.

11. Reibschweißvorrichtung nach Anspruch 10,
**dadurch gekennzeichnet, dass**
sie Vorrichtungen zur Rotation von mindestens zwei Werkstücken (4) nach einem der Ansprüche 1 bis 9 umfasst.

12. Reibschweißvorrichtung nach einem der Ansprüche 10 oder 11,
**dadurch gekennzeichnet, dass**
die Reibschweißvorrichtung dazu eingerichtet ist, zwei Werkstücke (4) in entgegengesetzte Richtungen rotieren zu lassen.

13. Verwendung einer Vorrichtung nach einem der vorangehenden Ansprüche zur Durchführung eines Reibschweißverfahrens zum Verbinden mindestens zweier äußerer Werkstücke (4) mit einem zwischen den beiden äußeren Werkstücken angeordneten inneren Werkstück, wobei die beiden äußeren Werkstücke während des Schweißganges gegenüber der Vorrichtung ruhen und das innere Werkstück rotiert und wobei das innere Werkstück von der Aufnahmevorrichtung gehalten wird.

14. Verwendung nach Anspruch 13,
**dadurch gekennzeichnet, dass**
die beiden äußeren Werkstücke vor dem Reibschweißvorgang in eine definierte räumliche Anordnung gebracht werden und während des Reibschweißvorganges diese definierte räumliche Anordnung beibehalten.

15. Verwendung nach einem der Ansprüche 13 oder 14,
**dadurch gekennzeichnet, dass**
die beiden äußeren Werkstücke mit Gelenken versehen sind und es sich bei dem inneren Werkstück (4) um eine Welle handelt.

## Claims

1. Device for rotating at least one workpiece (4), wherein provision is made of a receiving device (1) which is mounted rotatably in a structural member (2) and which is configured to receive the workpiece (4) and to set it in rotation about a workpiece axis, wherein the receiving device (1) comprises a radially separable receiving annular gear (15), wherein a radially separable collet chuck (26) is arranged in the receiving annular gear (15), wherein a kinematics system (51) for actuating the collet chuck (26) for clamping the workpiece (4) is arranged in the interior of the receiving annular gear (15),
**characterized in that**
the kinematics system (51) comprises two transmission stages (52, 53), wherein
the first transmission stage (52) converts a radial movement into an axial movement, and wherein
the second transmission stage (53) converts an axial movement into a radial movement.

2. Device according to Claim 1,
**characterized in that**
the first and second transmission stages (52, 53) of the kinematics system (51) comprise bevels (24, 32) and cones (25, 28).

3. Device according to either of the preceding claims,
**characterized in that**
the kinematics system (51) comprises elastic elements (33, 34) for applying the clamping force.

4. Device according to one of the preceding claims,
**characterized in that**
the collet chuck (26) is designed in such a way as to be able to be centred independently of the kinematics system (51) for actuating the collet chuck (26).

5. Device according to one of the preceding claims,
**characterized in that**
a clamping force acting on the workpiece (4) is settable.

6. Device according to one of the preceding claims,
**characterized in that**
a rolling-bearing surface (17) is formed on the periphery of the receiving annular gear (15).

7. Device according to one of the preceding claims,
**characterized in that**
the receiving annular gear (15) comprises a locking means (40).

8. Device according to Claim 7,
**characterized in that**
the locking means is of force-fitting or form-fitting form.

9. Device according to one of the preceding claims,
**characterized in that**
the device comprises a guide (22, 23) for centring the workpiece (4) independently of the clamping operation.

10. Friction-welding device comprising a device for rotating at least one workpiece (4) according to one of the preceding claims.

11. Friction-welding device according to Claim 10, **characterized in that**
said friction-welding device comprises devices for rotating at least two workpieces (4) according to one of Claims 1 to 9.

12. Friction-welding device according to either of Claims 10 and 11,
**characterized in that**
the friction-welding device is configured to allow two workpieces (4) to rotate in opposite directions.

13. Use of a device according to one of the preceding claims for carrying out a friction-welding process for connecting at least two outer workpieces (4) to an inner workpiece that is arranged between the two outer workpieces, wherein, during the welding operation, the two outer workpieces are stationary in relation to the device and the inner workpiece rotates, and wherein the inner workpiece is held by the receiving device.

14. Use according to Claim 13,
**characterized in that**
the two outer workpieces are brought into a defined spatial arrangement before the friction-welding operation and maintain this defined spatial arrangement during the friction-welding operation.

15. Use according to either of Claims 13 and 14,
**characterized in that**
the two outer workpieces are provided with joints and the inner workpiece (4) is a shaft.

## Revendications

1. Dispositif pour la rotation d'au moins une pièce (4), un dispositif de réception (1) monté de manière à pouvoir tourner dans une console (2) étant présent, lequel est mis au point pour recevoir la pièce (4) et l'amener en rotation autour d'un axe de pièce, le dispositif de réception (1) comprenant une couronne de réception (15) pouvant être divisée radialement, une pince de serrage (26) pouvant être divisée radialement étant disposée dans la couronne de réception (15), une cinématique (51) pour l'actionnement de la pince de serrage (26) pour le serrage de la pièce (4) étant disposée à l'intérieur de la couronne de réception (15),
**caractérisé en ce que**
la cinématique (51) comprend deux étages de rapport transmission (52, 53),
le premier étage de rapport de transmission (52) transformant un mouvement radial en un mouvement axial et
le second étage de rapport de transmission (53) transformant un mouvement axial en un mouvement radial.

2. Dispositif selon la revendication 1,
**caractérisé en ce que**
le premier et le second étage de rapport de transmission (52, 53) de la cinématique (51) comprennent des biseaux (24, 32) et des cônes (25, 28).

3. Dispositif selon l'une des revendications précédentes,
**caractérisé en ce que**
la cinématique (51) comprend des éléments élastiques (33, 34) servant à appliquer la force de serrage.

4. Dispositif selon l'une des revendications précédentes,
**caractérisé en ce que**
la pince de serrage (26) est formée de telle sorte qu'elle peut être centrée indépendamment de la cinématique (51) pour actionner la pince de serrage (26).

5. Dispositif selon l'une des revendications précédentes,
**caractérisé en ce que**
une force de serrage agissant sur la pièce (4) peut être réglée.

6. Dispositif selon l'une des revendications précédentes,
**caractérisé en ce que**
une surface de palier à roulement (17) est formée sur la périphérie de la couronne de réception (15).

7. Dispositif selon l'une des revendications précédentes,
**caractérisé en ce que**
la couronne de réception (15) comprend un système de verrouillage (40).

8. Dispositif selon la revendication 7,
**caractérisé en ce que**
le système de verrouillage est formé de manière à être à force ou à complémentarité de forme.

9. Dispositif selon l'une des revendications précédentes,
**caractérisé en ce que**
le dispositif comprend un guide (22, 23) pour centrer la pièce (4) indépendamment du processus de serrage.

10. Dispositif de soudage par friction, qui comprend un dispositif pour la rotation d'au moins une pièce (4) selon l'une des revendications précédentes.

11. Dispositif de soudage par friction selon la revendication 10,
**caractérisé en ce que**
il comprend des dispositifs pour la rotation d'au moins deux pièces (4) selon l'une des revendications 1 à 9.

12. Dispositif de soudage par friction selon l'une des revendications 10 ou 11,
**caractérisé en ce que**
le dispositif de soudage par friction est mis au point pour faire tourner deux pièces (4) dans des directions opposées.

13. Utilisation d'un dispositif selon l'une des revendications précédentes pour la mise en œuvre d'un procédé de soudage par friction pour relier au moins deux pièces (4) extérieures à une pièce intérieure disposée entre les deux pièces extérieures, les deux pièces extérieures reposant pendant le processus de soudage à l'opposé du dispositif et la pièce intérieure tournant et la pièce intérieure étant maintenue par le dispositif de réception.

14. Utilisation selon la revendication 13,
**caractérisée en ce que**
les deux pièces extérieures sont placées dans une disposition spatiale définie avant le processus de soudage par friction et conservent ladite disposition spatiale définie pendant le processus de soudage par friction.

15. Utilisation selon l'une des revendications 13 ou 14,
**caractérisée en ce que**
les deux pièces extérieures sont pourvues d'articulations et la pièce (4) intérieure est un arbre.
